# EUROPEAN PATENT APPLICATION

(11) **EP 1 239 644 A1**
(43) Date of publication of application: **11.09.2002**
(21) Application number: 01400612.6
(22) Date of filing: 08.03.2001
(51) Int. Cl.: H04L 29/06, H04L 12/28, H04N 7/24

(54) **Method for managing isochronous file transfers in a HAVI environment**

(71) Applicant: THOMSON multimedia, 92100 Boulogne Billancourt (FR)
(72) Inventor: Mace, Gael, 92648 Boulogne Cedex (FR); Autier, Ingrid, 92648 Boulogne Cedex (FR); Tapie, Thierry, 92648 Boulogne Cedex (FR)
(74) Representative: Kohrs, Martin

(57) **Abstract**

The invention concerns a method for handling isochronous files in a HAVi network.

The method is characterized in that it comprises the steps of:
- opening a connection between a client device and a source device;
- specifying a file to be transferred in isochronous manner over the connection;
- specifying a starting point, within said file, and from which the transfer is to be carried out;
- initiating the file transfer from the starting point.

## Description

The Home Audio Video interoperability (HAVi) architecture is an attempt to accomplish high speed interconnectivity over an IEEE 1394 serial bus network for transacting audio/visual data. This initiative was specifically intended to address the needs of the consumer electronics devices to enable interactivity (with user involvement in a user-device interaction paradigm) and interoperability (with no user involvement in a device-device interaction paradigm). Further, within HAVi, there is a strong emphasis on enabling streaming applications in addition to control applications. An example of a streaming application would be an application transferring a video stream from a recording device to a decoder or display, while an example of a control application would be an application for programming the behavior of devices. This implies a support for both isochronous and asynchronous transactions.

For the purpose of managing isochronous streams, HAVi implements a stream manager which allows to set up isochronous connexions between functional components of one or more devices. Functional components can be controlled through Functional Component Modules, which have defined application programmable interfaces. One such Functional Component Module is the 'AVDisc' module, which is dedicated to the control of isochronous audio and/or video streams on a support such as a compact disc.

Because of its dedication to isochronous streams, the AVDisc module is not adapted to the management of hybrid isochronous and asynchronous data, or only asynchronous data. Such kind of data may for example be present on a hard disk or another type of recordable medium, used both for storing isochronous streams such as video, and asynchronous data, such as, in the case of a television application, program guide data. In its current version, HAVi does not specify a Functional Component Module for such a kind of functional component.

Furthermore, HAVi currently allows little control over the restarting of a file transfer once it has been aborted for various reasons.

The object of the invention is a method for managing isochronous files in a HAVi network, characterized in that it comprises the steps of:
- opening a connection between a client device and a source device;
- specifying a file to be transferred in isochronous manner over the connection;
- specifying a starting point, within said file, and from which the transfer is to be carried out;
- initiating the file transfer.

The invention permits to restart transfer of an isochronous file from a point other than the beginning of the file.

According to an embodiment of the invention, the method further comprises the step of providing, to a client application, a file manager functional component module for managing a file system of isochronous files and asynchronous files on recording media, wherein said file manager functional component module provides an application programmable interface for access by said client application.

The file manager functional component module permits handling of data storage media using file systems.

Other characteristics and advantages of the invention will appear through the description of a non-limiting embodiment, explained with the help of the enclosed drawings among which:
- figure 1 is a diagram of the software structure of a device according to the present embodiment;
- figure 2 is an example of a global directory built by a File Manager functional component module according a variant embodiment;
- figure 3 is a flowchart of the establishment of a global directory, according to the variant embodiment.

In order to provide background information to the reader, the present description includes the following three annexes:
- annex 1 is a list of document references, to which the reader can refer to for further information,
- annex 2 is a list of acronyms used in the present application,
- annex 3 is a glossary of terms used in the present application.

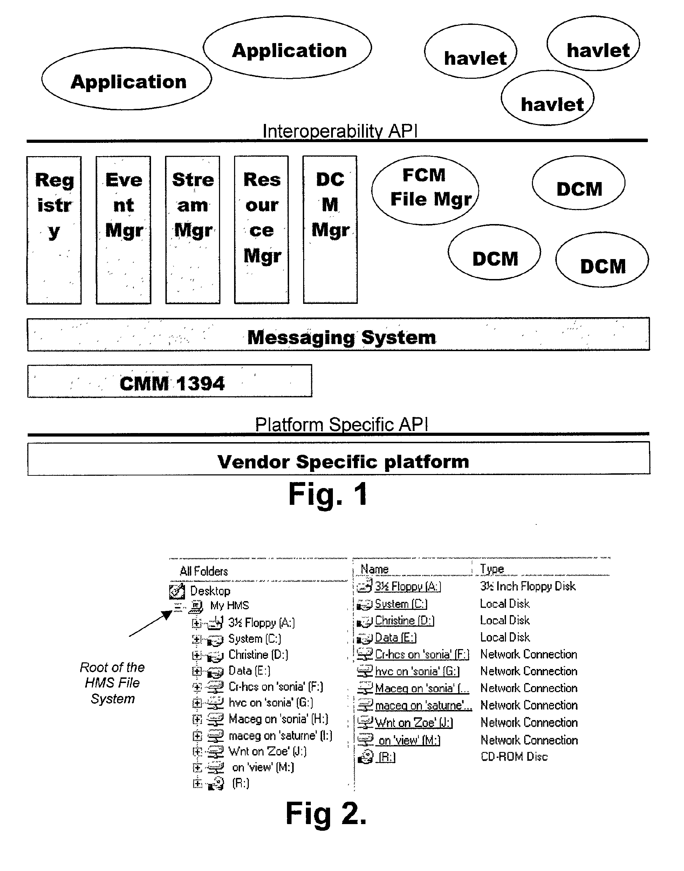

Figure 1 is a diagram of one type of HAVi-compliant device's software structure, according to the present embodiment. In addition to the known components of such a structure, the device further comprises a File Manager Functional Component Module, which is a software element providing an application programmable interface to other objects (which may be local or remote), in particular to applications, in order to control isochronous and asynchronous connections and files, as well as directories of a recording medium. According to the present embodiment, the recording medium of the device of figure 1 is a hard disc drive.

The File Manager FCM uses the service of the Stream Manager when establishing an isochronous connection.

Placing the File Manager at the level of a functional component module, as opposed to a service such as the Stream Manager, the Registry and the Resource Manager, has the advantage of allowing a certain backward compatibility. Indeed, if the File Manager were a service of the same type as the Stream Manager for example, it would be required to retrofit every Full A/V device in the network with a File Manager, since an application requiring such a service always has to make its request to a local service, which eventually dispatches the request to identical services of remote devices. As an FCM, the File Manager can be contacted by any application, be it a local application or one from a remote device. FCMs in remote devices may be discovered using the local Registry service, which has knowledge of local software elements, and the capacity to query remote Registries to obtain information about what software elements they registered.

According to the present embodiment, the File Manager Functional Component Module gives access to a recording medium which is part of the same device as the File Manager FCM itself.

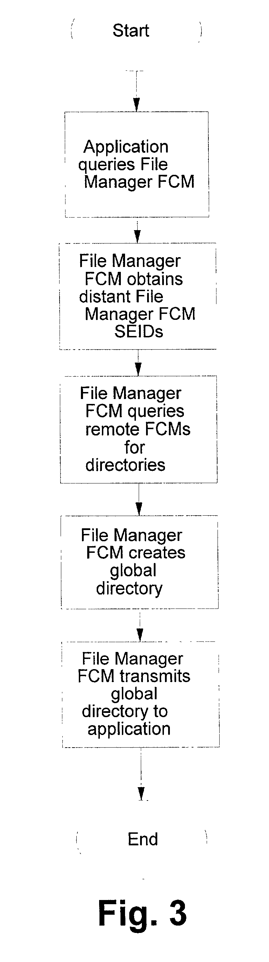

According to a variant embodiment, a File Manager Functional Component Module provides an image of all File Manager compatible devices on the network. To achieve this, it detects other File Manager FCMs - as an option, also AVDisc FMCs - in the network through its local Registry, obtains their identifier and then requests the directory tree of each of the corresponding devices to build a global directory. Such a global directory for a network is illustrated by figure 2. This way of proceeding has the advantage of avoiding having each application of a device query its local Registry by itself. An application needs only exchange information with one File Manager FCM. The File Manager thus has a global network function, as a service such as the Stream Manager would have, but without the disadvantages cited above. Figure 3 is a flow chart of the procedure of establishing a global directory.

The Functional Component Module (FCM) application programmable interface (API) supports a set of common operations for non AV Disks that have a File System.

The File Manager FCM is designed for both bulk transfer and asynchronous stream transfer.

As described by figure 2, a connected client is able to navigate over all the drives of the network (local and logical and/or physical) related to the equipment.

**Table 1**

| indicates the services provided by the file manager | | | | |
|---|---|---|---|---|
| **Service** | **Comm Type** | **Locality** | **Access** | **Resv Prot** |
| FileManager::IsoConnect | M | global | all | |
| FileManager::AsyncConnect | M | global | all | |
| FileManager::FileOpen | M | global | all | |

| **Service** | **Comm Type** | **Locality** | **Access** | **Resv Prot** |
|---|---|---|---|---|
| FileManager::FileClose | M | global | all | |
| FileManager::Get | M | global | all | |
| <Client>::Get | MB | global | File System (all) | |
| FileManager::Put | M | global | all | |
| FileManager::Abort | M | global | all | |
| FileManager::Disconnect | M | global | all | |
| FileManager::ChDir | M | global | all | |
| FileManager::Rename | M | global | all | |
| FileManager::Del | M | global | all | |
| FileManager::RmDir | M | global | all | |
| FileManager::MkDir | M | global | all | |
| FileManager::PwD | M | global | all | |
| FileManager::Ls | M | global | all | |

### Table 1

### (1) The data structures of the file manager will now be described in detail.

### (a) FileLoc

### Prototype

enum FileLoc {START, MIDDLE, END}

### Description

Indicates whether the message from a producer to a consumer is the first of a transfer (START), in the middle of a transfer (MIDDLE) or the last of a transfer (END). END is used if the transfer is accomplished in a single message.

### (b) FileSystemTransactionMode

### Prototype

enum FileSystemTransactionMode {NONE, GET, PUT}

### Description

Indicates the transaction being processed for the current open file. For an isochronous connection initialization, the NONE value is not available.

### (c) FileSystemOpenMode

### Prototype

enum FileSystemOpenMode {NORMAL, APPEND, RESTART}

### Description

Define the mode for the connection open operation (Client → Server).

NORMAL: transfer a copy of the file, specified in the pathname. The status and content of the file at the server site shall be unaffected.

APPEND: If the file specified in the pathname exists at the server site, then the data shall be appended to that file; otherwise the file specified in the pathname shall be created at the server site.

RESTART: skips over the file to the specified data checkpoint. In case of an asynchronous connection, the open command shall be immediately followed by the appropriate service command that shall cause file transfer to resume. In case of an isochronous connection, this is not required, since opening the isochronous connection implicitly contains the appropriate service command.

### (2) The File Manager methods will now be described in detail.

### (a) FileManager::IsoConnect

### Prototype

Status FileManager::IsoConnect (
in FileSystemTransactionMode transMode

in wstring fileName,
in FileSystemOpenMode openMode,
in long restartPoint,
out long cid )

### Parameter

transMode - Define the transaction mode (Client → Server). Should not be NONE.

fileName - File name specifying the complete path for the file to transfer if any.

openMode - Define the mode for the connection open operation.

RestartPoint - Offset (in byte) from the beginning of the file at which the transfer is to be restarted. Relevant only for a RESTART open mode.

cid - identifier of the connection. It allows starting several connections from a single software component and also permits matching a response with a request.

### Description

This command allows a software element to open a isochronous connection between the client software element plug and the File Manager FCM plug, relying on Stream manager facilities. Before calling this FileManager::IsoConnect function, the client software element should first:
- use the Fcm::GetPlugCount and Dcm::GetPlugStatus methods to know which plug of the File Manager FCM could be used for the connection between itself (client) and the File Manager.
- use the StreamManager::FlowTo method to create an isochronous stream connection between itself (client) and the File Manager.

Once the plugs have been connected by the Stream Manager, the client can call the FileManager::IsoConnect function to get an identifier for the File Manager connection.

Furthermore, The *restartPoint* parameter represents the server marker at which file transfer is to be restarted. This command does cause file transfer from the specified data checkpoint (if any).

Notice that the FileManager::FileOpen, FileManager::FileClose, FileManager::Get and FileManager::Put calls shall not be used in the isochronous transfer mode.

### Error code

- EINVALID_PARAMETER: fileName doesn't exist and transMode is GET, restartPoint doesn't exist in fileName, transMode is NONE
- ERESOURCE_LIMIT: no more available cid, no more thread can be created

### (b) FileManager:: AsyncConnect

### Prototype

Status FileManager::AsyncConnect (
in long clientMessageMaxSize,
out long serverMessageMaxSize,
out long cid )

### Parameter

clientMessageMaxSize - indicates the maximum size (in bytes) of a message accepted by the requester. The File Manager FCM will take this parameter into account during the sending of incoming transfers.

serverMessageMaxSize - indicates the maximum size (in bytes) of a message accepted by the node where resides the File Manager FCM. The client software element will take this parameter into account during the sending of outgoing transfers.

cid - identifier of the connection. It allows starting several connections from a single software component and also permits matching a response with a request.

### Description

This command allows a software element to open an asynchronous connection. Each *FileManager::AsyncConnect* allows the File Manager FCM to manage a context per each connected client (connection identifier and function to call in order to send data to its client).

### Error code

ERESOURCE_LIMIT: no more available cid, no more thread can be created

### (c) FileManager:: FileOpen

### Prototype

Status FileManager::FileOpen (
in long cid,

in wstring fileName,
in FileSystemOpenMode mode,
in long restartPoint)

### Parameter

cid - identifier of the connection between the client application and the File Manager FCM (issued by a client application from a previous *AsyncConnect* call).

fileName - File name specifying the complete path for the file to transfer if any (only in context of the *FileManager::Get* and *FileManager::Put* APIs).

mode - Define the mode for the connection open operation (Client → Server).

restartPoint - Offset (in byte) from the beginning of the file at which the transfer is to be restarted. -1 if no restart is needed.

### Description

This command allows a software element to identify the file that will be transferred. A client cannot open several files at the same time within the same connection.

The *restartPoint* parameter represents the server marker at which file transfer is to be restarted. This parameter has no meaning if the file is not open in RESTART mode.

This command does not cause file transfer but skips over the file to the specified data checkpoint (if any). In this context, the appropriate following command (FileManager::Put, FileManager::Get) causes file transfer to resume.

### Error code

- EINVALID_PARAMETER: cid doesn't exist, cid was created for a isochronous connection, restartPoint doesn't exist in fileName and openMode is RESTART
- EACCESS_VIOLATION: cid already has an opened file, fileName cannot be opened nor created, the client is not allowed to access this connection

### (d) FileManager:: FileClose

### Prototype

Status FileManager::FileClose (in long cid)

### Parameter

cid - identifier of the connection between the client application and the File Manager FCM (issued by a client application from a previous *AsyncConnect* call).

### Description

This command allows a software element to terminate all operations previously done on a given file.

### Error code

- ECONNECTION: cid doesn't exist, cid was created for a isochronous connection
- EACCESS_VIOLATION: no open file for cid connection, the client is not allowed to access this connection

### (e) FileManager:: Get

### Prototype

Status FileManager::Get ( in long cid,
in OperationCode opCode)

### Parameter

cid - identifier of the connection between the client application and the File Manager FCM (issued by a client application from a previous *AsyncConnect* call).

opCode - the operation code provided by the client that the File Manager FCM will use to send any requested file. The client function identified by this operation code must be designed according to the *<Client>::Get API.*

### Description

This command causes the initialization of the server in order to accept the data that will be transferred (cf. <Client>::Get). If SUCCESS is returned, then the client will receive the content of open file. The messages will have the opCode operation code.

If the file associated to the specified connection was open with RESTART mode, then the File Manager FCM will send data starting at restartPoint in the file. Otherwise, the file content will be entirely transferred.

### Error code

- EINVALID_PARAMETER: cid doesn't exist, cid was created for a isochronous connection
- EACCESS_VIOLATION: no open file for cid connection, previous file transfer is not achieved for this connection, the client is not allowed to access this connection
- EFILE_LOCKED: another client is writing data in the same file with another connection

### (f) <Client>:: Get

### Prototype

Status <Client>::Get ( in long cid,
in FileLoc where,
in sequence<octet> data )

### Parameter

cid - identifier of the connection between the client application and the File Manager FCM (issued by a client application from a previous *AsyncConnect* call).

where - informs the software element client that the message contains the first, the last or a middle segment of the data to be transferred.

data - contains a part (a multi-segment transfer) or the entire data transferred for the connection identified by the *cid* parameter.

### Description

This command causes the server (File Manager FCM) to transfer a copy of the file, specified in the pathname. The status and contents of the file at the server site shall be unaffected.

### Error code

- EINVALID_PARAMETER: cid is unknown for the client

### (g) FileManager:: Put

### Prototype

Status FileManager::Put ( in long cid,
in FileLoc where,
in sequence<octet> data )

### Parameter

cid - identifier of the connection between the client application and the File Manager FCM (issued by a client application from a previous *AsyncConnect* call).

where - informs the software element client that the message contains the first, the last or a middle segment of the data to be transferred.

data - contains a part (a multi-segment transfer) or the entire data transferred for the connection identified by the *cid* parameter.

### Description

This command causes the server to accept the data transferred via the data connection and to store the data as a file at the server site. If the file specified in the pathname exists at the server site, then its contents shall be replaced by the data being transferred. A new file is created at the server site if the file specified in the pathname does not already exist.

If the file associated to the specified connection was open with NORMAL mode, and the file location is START (or END when only one API call is necessary) then the previous file content is discarded.

If the file was open with RESTART mode, and file location is START (or END when only one API call is necessary) then the transfer will start at restartPoint. The previous data are discarded from restartPoint.

### Error code

- EINVALID_PARAMETER: cid doesn't exist, cid was created for a isochronous connection
- EACCESS_VIOLATION: no open file for cid connection, client is not allowed to write in file, previous file transfer is not achieved for this connection, the client is not allowed to access this connection
- EFILE_LOC: error for block position in file
- EFILE_LOCKED: another client is still reading file content or writing data in the same file

### (h) FileManager:: Abort

### Prototype

Status FileManager::Abort ( in long cid )

### Parameter

cid - identifier of the connection between the client application and the File Manager FCM (issued by a client application from a previous *AsyncConnect* or *IsoConnect* call).

### Description

This command tells the server (File Manager FCM) to abort the previous file transfer (FileManager::Put, <Client>::Get). No action is to be taken if the previous transfer has been completed.

### Error code

- EINVALID_PARAMETER: cid doesn't exist
- EACCESS_VIOLATION: the client is not allowed to access this connection

### (i) FileManager:: Disconnect

### Prototype

Status FileManager::Disconnect ( in long cid )

### Parameter

cid - identifier of the connection between the client application and the File Manager FCM (issued by a client application from a previous *AsyncConnect* or *IsoConnect* call).

### Description

This function allows a software element to close a File Manager connection. If an isochronous connection has been opened, the client application should drop the isochronous stream between itself and the File Manager FCM using the appropriate Stream Manager method.

### Error code

- EINVALID_PARAMETER: cid doesn't exist
- EACCESS_VIOLATION: the client is not allowed to access this connection

### Remarks

Sending a FileManager::Disconnect message will abort any other action being performed. Once a client called FileManager::Disconnect, the cid is not available any more.

### (j) FileManager:: ChDir

### Prototype

Status FileManager::ChDir ( in long cid,
in wstring newPathName )

### Parameter

cid - identifier of the connection between the client application and
the File Manager FCM (issued by a client application from a previous *AsyncConnect* or *IsoConnect* call).

newPathName - Pathname specifying a directory or other system dependent file group designator.

### Description

This command allows the user to work with a different directory for file storage or retrieval.

### Error code

- EINVALID_PARAMETER: cid doesn't exist, pathName doesn't exist or is empty
- EACCESS_VIOLATION: the client cannot access specified directory, the client is not allowed to access this connection

### (k) FileManager:: Rename

### Prototype

Status FileManager::Rename ( in long cid,
in wstring oldFileName,
in wstring newFileName )

### Parameter

cid - identifier of the connection between the client application and the File Manager FCM (issued by a client application from a previous *AsyncConnect* or *IsoConnect* call).

oldFileName - Old pathname of the file to be renamed.

newPathName - New pathname of the file.

### Description

This command causes a file to be renamed.

### Error code

- EINVALID_PARAMETER: cid doesn't exist, oldFileName doesn't exist, newFileName has a bad format
- EACCESS_VIOLATION: the client is not allowed to change the name of the file, the client is not allowed to access this connection, the file is open

### (I) FileManager:: Del

### Prototype

Status FileManager::Del ( in long cid,
in wstring fileName )

### Parameter

fileName - File name specifying the complete path for the file to be deleted.

cid - identifier of the connection between the client application and
the File Manager FCM (issued by a client application from a previous *AsyncConnect* or *IsoConnect* call)

### Description

This command causes the file specified in the pathname to be deleted at the server site.

### Error code

- EINVALID_PARAMETER: cid doesn't exist, fileName doesn't exist
- EACCESS_VIOLATION: the client is not allowed to suppress the file, the client is not allowed to access this connection, the file is open

### (m) FileManager:: RmDir

### Prototype

Status FileManager::RmDir ( in long cid,
in wstring pathName )

### Parameter

pathName - Pathname specifying the directory to be deleted.

cid - identifier of the connection between the client application and the File Manager FCM (issued by a client application from a previous *AsyncConnect* or *IsoConnect* call).

### Description

This command causes the directory specified in the pathname to be removed as a directory (if the pathname is absolute) or as a subdirectory of the current working directory (if the pathname is relative).

### Error code

- EINVALID_PARAMETER: cid doesn't exist, pathName doesn't exist
- EACCESS_VIOLATION: the client is not allowed to suppress the directory, the client is not allowed to access this connection, the directory is used in a connection

### (n) FileManager:: MkDir

### Prototype

Status FileManager::MkDir ( in long cid,
in wstring pathName )

### Parameter

pathName - Pathname specifying the directory to be created.

cid - identifier of the connection between the client application and the File Manager FCM (issued by a client application from a previous *AsyncConnect* or *IsoConnect* call).

### Description

This command causes the directory specified in the pathname to be created as a directory (if the pathname is absolute) or as a subdirectory of the current working directory (if the pathname is relative).

### Error code

- EINVALID_PARAMETER: cid doesn't exist, pathName already exists
- EACCESS_VIOLATION: the client is not allowed to create a directory, the client is not allowed to access this connection

### (o) FileManager:: Pwd

### Prototype

Status FileManager::PwD ( in long cid,
out wstring pathName)

### Parameter

pathName - Pathname specifying the current working directory.

cid - identifier of the connection between the client application and the File Manager FCM (issued by a client application from a previous *AsyncConnect* or *IsoConnect* call).

### Description

This command causes the name of the current working directory to be returned in the reply.

### Error code

- EINVALID_PARAMETER: cid doesn't exist, the client is not allowed to access this connection

### (p) FileManager:: Ls

### Prototype

Status FileManager::Ls ( in long cid, in wstring pattern,
out sequence <wstring> fileNameList)

### Parameter

pattern - Pathname specifying the directory to be listed, or an expression indicating the list of files whose information must be returned. The pattern format is described in the Data description section of this document.

fileNameList - List of filename in the specified directory.

cid - identifier of the connection between the client application and the File Manager FCM (issued by a client application from a previous *AsyncConnect* or *IsoConnect* call).

### Description

This command causes a list to be sent from the server (the File Manager FCM) to the passive client. If the pathname specifies a directory or other group of files, the server should transfer a list of files and/or directories in the specified directory. If the pathname specifies a file then the server should send current information on the file (type, size, owner, last modification date, etc.). An empty argument implies the user's current working directory. The data transfer is in ASCII type.

### Error code

- EINVALID_PARAMETER: cid doesn't exist, the client is not allowed to access this connection, path is unknown

### Remarks

If pathName is empty or ".", it represents the current directory.

If pathName is a regular expression, it represents a list of files. In this case, each element in fileNameList represents information concerning a file.

In other cases, pathName represents either a file (with a file extension), or a directory (without file extension)

### (3) The File Manager Internal Data Structure will now be described.

### (a) FileSystemConnectionType

### Prototype

enum FileSystemConnectionType {NONE, ISOCHRONOUS, ASYNCHRONOUS}

### Description

Defines the type of connection established between the client and the file manager. Value NONE corresponds to a connection that is under creation or destruction, and that cannot be used by a client.

### (b) FileSystemConnection

### Prototype

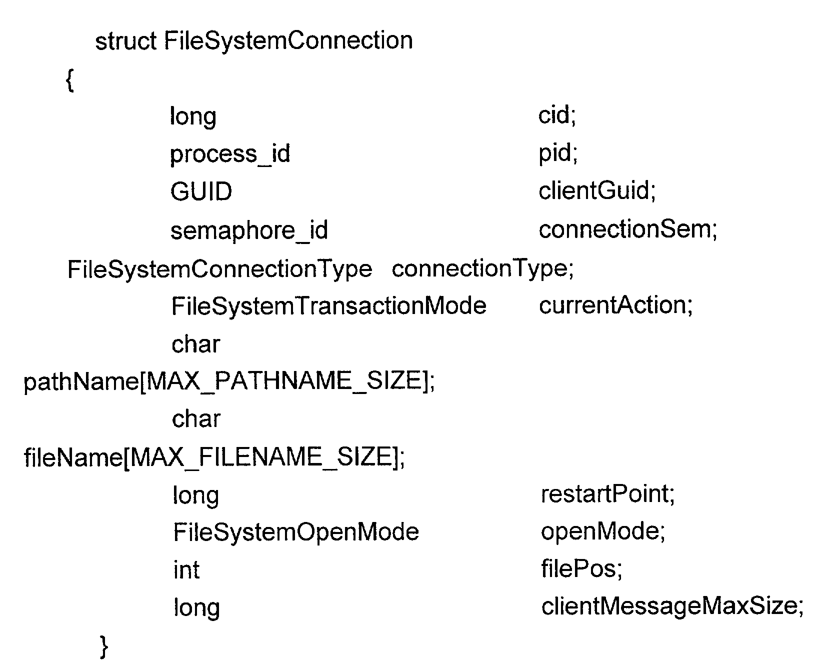

### Description

Client Managers and Connection Manager refer to connections described with the FileSystemConnection structure.

cid field is a connection identifier, given by the Connection Manager.

pid field is the process identifier of the Client Manager thread that will treat commands for this connection.

clientGuid field represents the device on which the client that created the connection is located.

connectionSem field is a semaphore used to access connectionType and currentAction fields. This semaphore is necessary because these two fields may be modified either by ConnectionMgr thread or by ClientMgr thread.

connectionType field indicates whether this is an isochronous or an asynchronous connection. This field is used by the Connection Manager or the Client Manager to check if a command can be performed. The NONE value means that either the connection is not initialized yet, or the connection is not available any more (after a FileManager::Disconnect command). This field enables the FileManager::disconnect command to have high priority on other commands.

currentAction field gives the command that is under process for the current open file. A NONE value (affected by the ConnectionMgr thread) means that the previous action has to be aborted.

pathName contains the name of the current directory for this connection.

fileName contains the name of the current open file for this connection. An empty value means that no file is open.

restartPoint field is the value of the restartPoint parameter given by the client with the FileManager::FileOpen command.

openMode field is the value of the openMode parameter given by the client with the FileManager::FileOpen command.

filePos field contains the current position in the open file.

### (4) The File Manager Internal Implementation will now be described.

This section describes the internal data used by File Manager FCM, actions executed for each file manager command, with threads involved for each command. For file manager commands, normal lines correspond to actions executed by the Connection Manager thread and italic lines to actions executed by the Client Manager thread. For the <Client>::Get API, normal lines correspond to the actions executed by the client main thread.

### (a) Global variables

MAX_CLIENT_MANAGER = 32: This constant defines the number of connections that can be simultaneously established.

ClientMgrTable: This table contains information about all connections managed by the file manager FCM. Each entry has type FileSystemConnection.

### (b) FileMgr Install

### Prototype

void FileMgr_Install (void );

### Description

This function is used to install the File Manager FCM. To simplify installation, several functions could correspond to File Manager FCM installation. All these functions should be called by the DCM.

### Implementation

- Get SEID
- Create ClientMgrTable with MAX_CLIENT_MANAGER entries
- Tell the DCM that the File Manager FCM is installed
- Register in the Registry database
- Start loop waiting for messages (this is also DCM loop)

### (c) FileMgr Unlnstall

### Prototype

void FileMgr_Uninstall (void);

### Description

This function is used to uninstall the File Manager FCM. This function should be called by the DCM.

### Implementation

- Tell the DCM that the File Manager is not available any more
- Unregister SEID from Registry database
- For each ClientMgr thread still running, call FileManager::Disconnect command
- When all ClientMgr threads are stopped, free ClientMgrTable
- Free SEID

### (d) FileManager::IsoConnect

### Implementation

- Send HAVi response with errorCode = ENOT_IMPLEMENTED

### (e) FileManager::AsyncConnect

### Implementation

- Entry allocation in ClientMgrTable
- Creation of ClientMgr thread
- Initialization of new table entry
- Last instruction: entry->connectionType = ASYNCHRONOUS
- Send HAVi response

### (f) FileManager::FileOpen

### Implementation

- Send command to ClientMgr thread (MessageWrite)
- Open file
- Update fileName in ClientMgrTable (+ restartPoint, openMode)
- Send HAVi response

### (g) FileManager::FileClose

### Implementation

- Send command to ClientMgr thread (MessageWrite)
- Close file
- Update fileName in ClientMgrTable (+ restartPoint, openMode)
- Send HAVi response

### (h) FileManager::Get

### Implementation

- Send command to ClientMgr thread (MessageWrite)
- Update currentAction field in ClientMgrTable
- Send HAVi response
- Loop for sending <Client>::Get messages, until end of file, Abort or Disconnect
- Update currentAction field in ClientMgrTable

### (i) <Client>::Get

### Implementation

- Put data into a buffer
- Send HAVi response

### (j) FileManager::Put

### Implementation

- Send command to ClientMgr thread (MessageWrite)
- Update currentAction field in ClientMgrTable
- Write data into file
- Update currentAction field in ClientMgrTable
- Send HAVi response

### (k) FileManager::Abort

### Implementation

- Update currentAction field in ClientMgrTable

### (I) FileManager::Disconnect

### Implementation

- Update currentAction and connectionType fields in ClientMgrTable
- Send message to ClientMgr thread
- Send HAVi response
- Abort file transfer, close file
- Signal the ConnectionMgr thread that the ClientMgr thread will stop
- End of ClientMgr thread
- Free entry in ClientMgrTable

### (m) FileManager::ChDir

### Implementation

- Send command to ClientMgr thread (MessageWrite)
- Change current directory
- Update pathName field in ClientMgrTable
- Send HAVi response

### (n) FileManager::Rename

### Implementation

- Send command to ClientMgr thread (MessageWrite)
- Rename file
- Send HAVi response

### (o) FileManager::Del

### Implementation

- Send command to ClientMgr thread (MessageWrite)
- Check whether the file is used by another client
- Suppress file
- Send HAVi response

### (p) FileManager::RmDir

### Implementation

- Send command to ClientMgr thread (MessageWrite)
- Check whether the directory is used by another client
- Suppress directory
- Send HAVi response

### (q) FileManager::MkDir

### Implementation

- Send command to ClientMgr thread (MessageWrite)
- Create directory
- Send HAVi response

### (r) FileManager::Pwd

### Implementation

- Send command to ClientMgr thread (MessageWrite)
- Send HAVi response with pathName field content or
- Send HAVi response with pathName field content

### (s) FileManager::Ls

### Implementation

- Send command to ClientMgr thread (MessageWrite)
- Get information (file list or information about specified files)
- Send HAVi response

### (t) FileMgrClient BulkTransfer

### Prototype

status FileMgrClient_BulkTransfer ( SEID clientSeid,
SEID fileMgrSeid,
uint cid,
uint clientMaxSize,

uint fileMgrMaxSize,
uint dataSize,
char *data);

### Parameter

clientSeid - SEID of the requester involved in this transfer

fileMgrSeid - SEID of the File Manager involved in this transfer

cid - defines the connection that is used in the File Manger FCM.

clientMaxSize - Maximum size (in bytes) of message that the Client node can accept.

fileMgrMaxSize - Maximum size (in bytes) of message that the node where the File Manager resides, can accept.

dataSize - Size of data (in bytes) to be transferred.

data - Pointer on buffer to be transferred.

### Description

This function is used to put a large buffer into a file. The role of this function is to transform the input buffer into several messages that are accepted by the client Messaging System and the File Manager, that is this function provides bulk transfer producer functionality as described in section 5.14 in **[3].**

### Implementation

- Select max size of message to send to File Manager
- Loop for sending data blocks to File Manager FCM
- If an error occurred, return error code

### General Constraints

### Application initialization

During application initialization, the maximum number of threads that can be launched is given in Kernellnit call. This number should take into account the number of Client Manager threads that could be necessary to run the application.

### API calls

With an isochronous connection, some APIs are not available. A client that established an isochronous connection is not allowed to call APIs referring to file transfer (FileManager::FileOpen, FileManager::FileClose, FileManager::Put, FileManager::Get).

### (5) Data description

It is clear that the specific values given below are valid for the HAVi context and could be different in another context.

### (a) HAVi Software Element Type

This value is used by the File Manager FCM when registering in the Registry database.

**File Manager FCM** 0x8000 0000

### (b) API Code

**File Manager FCM** 0x8000

### (c) HAVI Operation Codes

| **HAVi Message** | **API Code** | **Operation ID** |
|---|---|---|
| **FileManager::IsoConnect** | 0x8000 | 0x00 |
| **FileManager::AsyncConnect** | 0x8000 | 0x01 |
| **FileManager::FileOpen** | 0x8000 | 0x02 |
| **FileManager::FileClose** | 0x8000 | 0x03 |
| **FileManager::Get** | 0x8000 | 0x04 |
| **FileManager::Put** | 0x8000 | 0x05 |
| **FileManager::Abort** | 0x8000 | 0x06 |
| **FileManager::Disconnect** | 0x8000 | 0x07 |
| **FileManager::ChDir** | 0x8000 | 0x08 |
| **FileManager::Rename** | 0x8000 | 0x09 |
| **FileManager::Del** | 0x8000 | 0x0a |
| **FileManager::RmDir** | 0x8000 | 0x0b |
| **FileManager::MkDir** | 0x8000 | 0x0c |
| **FileManager::Pwd** | 0x8000 | 0x0d |
| **FileManager::Ls** | 0x8000 | 0x0e |

### (d) Error Codes

| **HAVi Error Name** | **API Code** | **Error Code** |
|---|---|---|
| **FileManager::EFILE_LOC** | 0x8000 | 0x80 |
| **FileManager::EFILE_LOCKED** | 0x8000 | 0x81 |

### (e) Pathname Format

A pathname can be absolute or relative to current directory. Both '/' and '\' are accepted as directory separators. The last character may be a directory separator, but this is not necessary.

### (f) Pattern Format

If the pattern represents a directory, then its format is either a pathname format, or an empty string. The current directory can be represented by an empty string or ".".

If the pattern represents a list of files, the following structures are accepted:
- the pathname may be absolute or relative to current directory
- both '/' and '\' are accepted as directory separators
- the '•' character indicates that any character can match with the pattern

### (6) Examples of setting up file transfer

An asynchronous connection is established by first calling the 'AsyncConnect' method. The 'FileOpen' method is then used to specify the name of the file to be transferred. A 'Get' or 'Put' method is then called in order to retrieve, respectively send the file. The 'Abort' method may be used by the client application to interrupt a transfer. A 'FileClose' method call is used to close the file, while a 'Disconnect' method call is then used to terminate the connection.

While the connection is open, other method calls may be made when not file is open, to initiate a change of directory, rename a file etc... These methods do not necessarily require the context of an open file.

An isochronous connection is established in a slightly different manner. By calling the 'IsoConnect' method, a connection is established, a file is identified and the direction of the transfer is defined. Thus only one method is required to initiate the transfer. This can be done since in isochronous mode, it is not required to exchange input or output buffer size (i.e. maximum message length) before the transfer begins. The file is automatically closed when the transfer is finished. A 'disconnect' can then be used to terminate the connection.

In other systems, no packet repetition is provided for an isochronous data transfer. According to the present embodiment, further to a voluntary or involuntary interruption in the transfer of an isochronous file, the client application can restart the transfer from a data checkpoint it defines. The interruption may have different causes, be it at the level of the client application or the source device, or may simply be caused by a system shut down due to power failure. The checkpoint may be chosen as corresponding to the last piece of data correctly received.

The data checkpoint, passed as a parameter ('restartPoint') in the 'IsoConnect' method is, in the case of the present embodiment, an offset in bytes compared to the beginning of the file. The data checkpoint value is taken into account by the File Manager FCM only when the mode in which the isochronous connection is to be opened is the 'RESTART' mode, as defined in the 'FileSystemOpenMode' data structure.

### Annex 1: References

**[1] IEEE Standard for a High Performance Serial Bus** IEEE std 1394-1995 / 30 August 1996
**[2] File Transfer Protocol** RFC 765 / October 1985
**[3] The HAVi Specification** Version 1.0 / January 18, 2000

### Annex 2: Acronyms

| **Acronym** | **Description** |
|---|---|
| API | Application Program Interface |
| AV data | Audio / Video data |
| BAT | Bouquet Association Table |
| CAT | Conditional Access Table |
| CMM | Communication Media Manager |
| CMP | Communication Management Procedures |
| CSR | Command and Status Register |
| DCM | Device Control Module |
| DVB | Digital Video Broadcasting |
| DMA | Digital Memory Access |
| EIT | Event Information Table |
| FAT | File Allocation Table |
| FCM | Functional Component Module |
| FCP | Function Control Protocol |
| FIFO | First In First Out |
| FPGA | Field-Programmable Gate Array |
| FS | File System |
| FM | File Manager |
| FTP | File Transfer Protocol |
| HAVi | Home Audio/Video Interoperability |
| HMS | Home Media Server |
| IDE | Intelligent Drive Electronics (or Integrated Drive Electronics) |
| IT data | Information Technology data |
| NIT | Network Information Table |
| NTFS | NT File system |
| OS | Operating System |
| PAT | Program Association Table |
| PMT | Program Map Table |
| PCI | Peripheral Component Interconnect |
| PCR | Plug Control Register |
| PMT | Program Map Table |
| SBM | Serial Bus Management |
| SI | Service Information |
| TAM | Transport Adaptation Module |
| TS | MPEG2 Transport Stream |
| UDF | Universal Disk Format |
| USB | Universal Serial Bus |

### Annex 3:

### (a) General terminology

### Direct Memory Access (DMA)

Technique for transferring data from main memory to a device without passing it through the CPU. Computers that have DMA channels can transfer data to and from devices much more quickly than computers without a DMA channel can. This is useful for making quick backups and for real-time applications.

### Digital Video (DV)

Refers to the capturing, manipulation and storage of video in digital formats. A digital video (DV) camcorder, for example, is a video camera that captures and stores images on a digital medium.

### IEEE 1394-1995

A very fast external bus standard that supports data transfer rates of up to 400 Mbps (400 million bits per second). A single 1394 port can be used to connect up 63 external devices. In addition to its high speed, 1394 also supports isochronous data -- delivering data at a guaranteed rate. This makes it ideal for devices that need to transfer high levels of data in real-time, such as video devices.

### IEC-61883

Specification of a digital interface for consumer electronic audio/video equipment using IEEE 1394-1995 standard. It describes the general packet format, data flow management and connection management for audiovisual data, and also the general transmission rules for control commands.

### Peripheral Component Interconnect (PCI)

. PCI is a 64-bit bus, though it is usually implemented as a 32-bit bus. It can run at clock speeds of 33 or 66 MHz. At 32 bits and 33 MHz, it yields a throughput rate of 133 MBps.

### Universal Serial Bus (USB).

A new external bus standard that supports data transfer rates of 12 Mbps (12 million bits per second). A single USB port can be used to connect up to 127 peripheral devices, such as mice, modems, and keyboards. USB also supports Plug-and-Play installation and hot plugging.

### (b) File System terminology

### File Allocation Table (FAT)

The file system used by DOS and Windows to manage files stored on hard disks, floppy disks, and other disk media.

### File Manager (FM)

Set of tools (APIs) allowing the use of storage media without any knowledge about the physical data organization.

### File System (FS)

Specification of the physical data organization on storage media (DVD, Hard Disk drive, ...) such an organization is intended for meeting various constraints (security, multiple access, real-time processing, etc.).

### File Transfer Protocol (FTP)

User-level oriented protocol for file transfer between host computers. Inode

Data structures that contain information about files in a File System. Each file has an inode and is identified by an inode number (i-number) in the file system where it resides. inodes provide important information on files such as user and group ownership, access mode (read, write, execute permissions) and type. Inodes are created when a file system is created. There are a set number of inodes, which indicates the maximum number of files the system can hold.

### Intelligent Drive Electronics (or Integrated Drive Electronics) (IDE)

An IDE interface is an interface for mass storage devices, in which the controller is integrated into the disk or CD-ROM drive.

### NT File system (NTFS)

. NTFS has features to improve reliability, such as transaction logs to help recover from disk failures. File control access is allowing through permissions for directories and/or individual files. NTFS files are not accessible from operating systems such as DOS. For large applications, NTFS supports spanning volumes, which means files and directories can be spread out across several physical disks.

### Raw device

Storage media (such as a Hard Disk Drive (HDD) or a partition) accessed physically sector by sector in a binary format.

### Raw device accesses

APIs allowing physical accesses on storage media without need to use the driver interface.

### Universal Disk Format (UDF)

This standard specifies a format and associated system requirements for volume and boot block recognition, volume structure, file structure and record structure for the interchange of information on media between users of information processing systems.

### (c) IEEE 1394-1995 terminology

### Link Layer

Layer providing the services to the transaction layer of one-way data transfer with confirmation of reception. The link layer also provides addressing, data checking, data framing, and isochronous data transfer (directly to the application).

### Physical layer

Translation of the logical symbols used by the Link layer into electrical signals to the different 1394 bus media. The physical layer guarantees that only one node at a time is sending data and defines the mechanical interfaces for the Serial Bus.

### Serial Bus Management (SBM)

The set of protocols, services, and operating procedures that monitors and controls the various 1394 bus layers: physical, link and transaction.

### Transaction layer

Definition of a request-response protocol to perform bus operations of type read, write, and lock.

### (d) IEC 61883 terminology

### Connection Management Procedure (CMP)

Procedures that an application shall use to manage connections between input and output plugs of AV devices by modifying plug control registers (PCR).

### Function Control Protocol (FCP)

Various command sets and various command transactions designed to control devices connected through an IEEE 1394 bus.

### Plug Control Register (PCR)

Special purpose CSR registers manipulated by the connection management procedures (CMP) to control an isochronous data flow.

### (e) HAVi terminology

### Communication Media Manager (CMM)

A network dependent entity in HAVi architecture interfacing with the underlying communication media to provide services to each other HAVi components or application programs residing on the same device as itself.

### Device Control Module (DCM)

A HAVi software element providing an interface for controlling general functions of a device.

### Event Manager

A software entity in HAVi architecture providing an event delivery service. An event is a change of state of a software element or of the home network.

### Functional Component Module (FCM)

A HAVi software element providing an interface for controlling a specific functional component of a device.

### Home Audio/Video Interoperability (HAVi)

The HAVi architecture is intended for implementation on Consumer Electronics (CE) devices and computing devices in order to provide a set of services which facilitates interoperability and the development of distributed applications on home networks.

### Messaging System

A network and transport layers independent entity in HAVi architecture providing HAVi software element with communication facilities. It is also in charge of allocating identifiers (SEIDs) for the software elements of that device.

### Registry

A system service whose purpose is to manage a directory of software elements available within the home network. It provides an API to register and search for software elements.

### Resource Manager

A HAVi software entity taking over the guiding of software element competing for and using the set of resources in the network.

### Stream Manager

A software entity in HAVi architecture providing an easy to use API for configuring end-to-end isochronous ("streaming") connections.

### Transport Adaptation Module (TAM)

A medium dependent part of the Messaging system managing message fragmentation, and message ordering and, error recovery process.

## Claims

1. Method for handling isochronous files in a HAVi network, **characterized in that** it comprises the steps of:
- opening a connection between a client device and a source device;
- specifying a file to be transferred in isochronous manner over the connection;
- specifying a starting point, within said file, and from which the transfer is to be carried out;
- initiating the file transfer from the starting point.

2. Method according to claim 1, further comprising the step of providing, to a client application, a file manager functional component module for managing a file system of isochronous files and asynchronous files on recording media, wherein said file manager functional component module provides an application programmable interface for access by said client application.

3. Method according to claim 2, wherein the application programmable interface comprises
- methods for acting upon isochronous connections and files;
- methods for acting upon asynchronous connections and files;
- file-type independent methods for acting upon both asynchronous and isochronous files.

4. Method according to claim 3, wherein the application programmable interface further comprises methods for acting upon directories of both asynchronous and isochronous files.

5. Method according to one of the claims 2 to 4, wherein the file manager functional component module establishes, using its local registry service, a global directory comprising directories of all file manager functional component module compatible devices.

6. Method according to claim 5, further comprising the step of including directories of devices managed by an AVDisc functional component module in the global directory.
